# EUROPEAN PATENT APPLICATION

(11) **EP 3 888 459 A1**
(43) Date of publication of application: **06.10.2021**
(21) Application number: 20166769.8
(22) Date of filing: 30.03.2020
(51) Int. Cl.: A01N 25/02, A01N 25/04, A01P 3/00, A01N 43/653

(54) **AN OIL-BASED FORMULATION, A METHOD FOR PREPARING AN OIL-BASED FORMULATION, APPLICATION AND USE THEREOF**

(71) Applicant: Sasol Chemicals GmbH, 20537 Hamburg (DE)
(72) Inventor: GIORDANO, Sebastiano Giovanni, 26841 Casalpusterlengo (IT); SANDEI, Nadia, 26867 Somaglia (IT)
(74) Representative: Müller Schupfner & Partner Patent- und Rechtsanwaltspartnerschaft mbB

(57) **Abstract**

The invention relates to an oil-based formulation comprising: a surfactant comprising an anionic emulsifier and a non-ionic emulsifier; and an oil component comprising an organic carrier, wherein the anionic emulsifier is an alkyl aryl sulfonic acid salt of the R¹ - Ar - SO₃⁻ XH⁺, where R¹ is a C₈ to C₁₈ alkyl group, Ar is benzene, and X is mono-, di- or tri- alkanolamine, wherein the alkanol within the alkanolamine is ethanol, isopropanol or mixtures thereof; and where the organic carrier is selected from the group comprising an alkylbenzene, an aromatic ester, a di-alkyl ether, or mixtures thereof.

## Description

### FIELD OF THE INVENTION

This invention relates to oil-based formulations. The invention extends to a method of preparing an agrochemical formulation from the oil-based formulation comprising an active ingredient and to the use of the agrochemical formulation in the treatment and/or protection of crops and/or seeds.

### BACKGROUND OF THE INVENTION

In the agrochemical field, surfactants and oils are widely used respectively to emulsify and/or dissolve pesticides in concentrates which are used *inter alia* in emulsifiable concentrates, suspension concentrates, emulsions or micro-emulsions and their dispersion in water solutions.

Pesticide active ingredients are typically dissolved or dispersed in oil or in water to maintain the pesticides chemically stable. Oil or water act as carriers for the applying the pesticide active ingredient in the pesticide formulation. When the pesticide active ingredient is a hydrophobic compound, the pesticide formulation commonly used is an oil-based concentrate, which implies the dissolution of the hydrophobic active ingredient in an oily solvent system (oil), to guarantee both chemical stability and efficacy in crop protection.

Chemical stability and efficacy in crop protection are key commercial requirements for oil-based and for water-based concentrate formulations.

Oil-based concentrate formulations do not mix with water, but water is the main medium to dilute pesticide formulations in the form of oil-based concentrate formulations for the final application to crops by the end user. Thus, a surfactant is needed in order to obtain a kinetically stable emulsion or a thermodynamically stable micro-emulsion of oil in water. Typically, the surfactants used comprise various blends of anionic surfactants and non-ionic surfactants.

A popular and widely used anionic surfactant is the calcium salt of dodecylbenzene sulfonic acid (CaDDBSA), dissolved in an inert solvent to decrease the viscosity. The CaDDBSA formulation is typically characterised by a cloudy appearance as a result of particles settling out and a non-homogeneous solution forming over time. This is undesirable.

A popular and widely used non-ionic surfactant is castor oil ethoxylate, which functions to improve and stabilize the emulsion properties of the anionic surfactant toward the oil in water.

Aromatic oils are commonly used to dissolve pesticide active ingredients in oil concentrates. Aromatic oils maintain the chemical stability as well as ensure a homogeneous dissolution of the pesticide active ingredient.

Typical oil-surfactants-pesticides formulations have a characteristic aromatic odour, are flammable due to flash points often below 65°C and have poor flowability characteristics which make handling difficult. The viscosity of the oil-surfactants-pesticides formulations can be reduced by the addition of glycol-type solvents, such as 1,2-propandiol, typically at concentrations between about 1 wt.% and about 3 wt.%.

### DESCRIPTION OF THE INVENTION

### General oil-based formulation

According to the invention, there is provided an oil-based formulation comprising:
a surfactant comprising an anionic emulsifier and a non-ionic emulsifier; and
an oil component comprising an organic carrier;
wherein the anionic emulsifier is one or more alkyl aryl sulfonic acid salts of the formula (I)

   R¹-Ar-SO₃⁻XH⁺ (I)

   wherein independently from each other R¹ is a C₈ to C₁₈ alkyl group, Ar is benzene, and X is a mono-, di- or tri-alkanolamine, wherein the alkanol is ethanol or isopropanol or both, in particular, the alkanolamine is an ethanolamine, wherein the ethanolamine comprises monoethanolamine, diethanolamine, and triethanolamine or the alkanolamine is an isopropanolamine, wherein the isopropanolamine comprises monoisopropanolamine, diisopropanolamine and triisopropanolamine; and
   wherein the organic carrier is selected from the group comprising an alkylbenzene, an aromatic ester, a di-alkyl ether or mixtures thereof.

Preferably, the alkyl group R¹ of the alkyl aryl sulfonic acid salt is a C₁₀ to C₁₃ alkyl group.

The alkyl group of the alkyl aryl sulfonic acid salt may be a linear alkyl group or a branched alkyl group. Preferably, the alkyl group of the alkyl aryl sulfonic acid salt is a linear alkyl group.

The anionic emulsifier may comprise an alcohol. Thus, the oil-based formulation may additionally comprise an alcohol. The alcohol may be a linear alcohol, a branched alcohol of a mixture thereof. Preferably, the alcohol is a linear alcohol.

The alcohol may be a C₄ to a C₁₀ alcohol. Preferably, the alcohol is a C₆ alcohol. Most preferably, the alcohol is a linear C₆ alcohol.

The non-ionic emulsifier may be a vegetable oil alkoxylate. The vegetable oil alkoxylate may be a castor oil alkoxylate. The castor oil alkoxylate may be a castor oil ethoxylate, a castor oil propoxylate, a castor oil EO-PO block alkoxylate, a castor oil PO-EO block alkoxylate, or a castor oil which is randomly ethoxylated and propoxylated. Preferably, the non-ionic emulsifier is a castor oil ethoxylate with between 10 mol EO and 50 mol EO, preferably between 35 mol EO and 40 mol EO (each absolute numbers), e.g. with 38 mol EO on average (number average).

The oil-based formulation may further comprise an active ingredient. Typically, the active ingredient is included in the organic carrier of the oil-based formulation. Where the oil-based formulation comprises an active ingredient, the oil-based formulation may be called an agrochemical formulation.

The active ingredient may be a pesticide, a fungicide, an insecticide, a herbicide or a mixture thereof.

Preferably, the active ingredient is a fungicide. The fungicide may be a triazole-type fungicide.

Triazole-type fungicides include, for example, epoxiconazole, triadimenol, propiconazole, prothioconazole, metconazole, cyproconazole, tebuconazole, flusilazole and paclobutrazol.

Preferably, the active ingredient is the triazole-type fungicide Propiconazole or the triazole-type fungicide Prothioconazole.

The alkylbenzene may be of the formula (II): 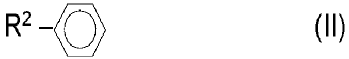
where R² is an alkyl group or an aryl group.
R² may be a linear alkyl group, a branched alkyl group or a mixture thereof.

Preferably, R² is a linear alkyl group, so that the organic carrier is a linear alkylbenzene.

Preferably, R² is a C₁₀ to a C₁₇ linear alkyl group. More preferably, R² is a C₁₀ to C₁₃ linear alkyl group.

Examples of linear alkylbenzene include those commercially available under the trade names ISORCHEM 113 (a linear alkyl benzene with a linear alkyl chain ranging from C₁₀ to C₁₃ and an average molecular mass of 240 g/mol) and HYBLENE 113 (a linear alkyl benzene with a linear alkyl chain ranging from C₁₀ to C₁₃ and an average molecular mass of 240 g/mol).

The aromatic ester may be an aromatic ester of an alcohol, the aromatic ester being of the formula (III-a)

Ar³-COOR³ (III-a)

or of the formula (III-b)

R³COO-Ar³ (III-b)

where R³ is a C₇ to C₃₆ alkyl group, preferably a C₁₂ to C₁₅ alkyl group, Ar³ is an aromatic group.

R³ may be a linear alkyl group, a branched alkyl group or a mixture thereof. Preferably, R³ is a linear alkyl group.

Preferably, R³ is a C₁₂ to C₁₅ linear alkyl group.

Preferably, Ar³ is a benzene group.

The alcohol group of the aromatic ester may be derived from oxo alcohols, Guerbet alcohols, Ziegler alcohols, natural alcohols derived from natural oils, or any combination of oxo alcohols, Guerbet alcohols, Ziegler alcohols and natural alcohols derived from natural oils.

Where the alcohol group of the aromatic ester is derived from oxo alcohols, the oxo alcohol may be branched oxo alcohol, linear oxo alcohol or mixtures thereof. The oxo alcohols may be C₉ to C₁₇ oxo alcohols.

Where the alcohol group of the aromatic ester is derived from Guerbet alcohols, the Guerbet alcohols may be C₁₂ to C₃₆ Guerbet alcohols.

Where the alcohol group of the aromatic ester is derived from Ziegler alcohols, the Ziegler alcohols may be C₆ to C₂₈ alcohols.

Where the alcohol group of the aromatic ester is derived from natural alcohols derived from natural oils, the natural oils may be vegetable oils.

Examples of aromatic (benzoic) esters include those commercially available under the trade name CEREWIN S.

The di-alkyl ether may be of the formula (IV):

R^{4a}-O-R^{4b} (IV)

where R^{4a} and R^{4b} are independently each alkyl groups.

R^{4a} and R^{4b} may be independently each a linear alkyl group or a branched alkyl group or a mixture thereof. Preferably, R^{4a} and R^{4b} may be independently each a linear alkyl group.

R^{4a} and R^{4b} may be independently each a C₆ to a C₁₈ alkyl group. Preferably, R^{4a} and R^{4b} are each independently a C₆ alkyl group.

Examples of di-alkyl ethers include those commercially available under the trade name NACOL ETHER 6 (di-n-hexyl ether).

The oil-based formulation may be or may be used as an emulsifiable concentrate, a suspo-concentrate, a suspo-emulsion, an oil dispersion, a micro emulsion or a micro emulsion concentrate. Preferably, the oil-based formulation is an emulsifiable concentrate or a micro emulsion concentrate. Most preferably, the oil-based formulation is an emulsifiable concentrate.

Many oil-based formulations comprise an added solvent or diluent. The added solvent or diluent is typically a glycol-type solvent or diluent, e.g. 1,2-dipropandiol. Typically, the added solvent or diluent is used to adjust the viscosity of the oil-based formulation. However, the oil-based formulation or the agrochemical formulation of the present invention does not require any such added solvent or diluent to adjust the viscosity thereof and preferably glycol-type and diol solvents are absent.

### Composition of the oil-based formulation

The oil-based formulation is water-free. By water-free is meant that the oil-based formulation comprises less than 1000 ppm water.

The surfactant may be present in the oil-based formulation in an amount of between 1 wt.% and 20 wt.%, preferably between 5 wt.% and 15 wt.%, most preferably 10 wt.%.

The alcohol may be present in the anionic emulsifier in an amount of between 10 wt.% and 40 wt.%, preferably between 20 wt.% and 30 wt.%, e.g. 25 wt.%.

The anionic emulsifier and the non-ionic emulsifier may be mixed in a ratio of from 30:70 (w/w) to 70:30 (w/w). Preferably, the anionic emulsifier and the non-ionic emulsifier are mixed in a ratio of from 40:60 (w/w) to 60:40 (w/w).

The organic carrier may be present in the oil-based formulation in an amount of between 15 wt.% and 90 wt.%, preferably between 30 wt.% and 50 wt.%.

The active ingredient may be present in the oil-based formulation in an amount of between 30 wt.% and 60 wt.%, preferably between 40 wt.% and 55 wt.%. The oil-based formulation comprising the active ingredient is called an agrochemical formulation.

According to one embodiment of the invention the surfactant consists of the anionic emulsifier and the non-ionic emulsifier, as defined above.

According to another embodiment of the invention the organic carrier consists of the alkylbenzene, the aromatic ester, the di-alkyl ether or mixtures thereof, as defined above.

### Preferred oil-based formulation

According to a preferred embodiment of the invention the oil-based formulation is water-free (< 1000 ppm water) and comprises:
a surfactant comprising
an anionic emulsifier in the form of a linear alkyl aryl sulfonic acid amine salt of formula (I)

   R¹-Ar-SO₃⁻XH⁺ (I)

   wherein
   R¹ is a C₁₀ to C₁₃ alkyl group,
   Ar is benzene, and
   X is triethanolamine;
a C₄ to C₈ alcohol;
a non-ionic emulsifier in the form of a vegetable oil alkoxylate; and
an oil component comprising a C₁₀ to C₁₃ linear alkylbenzene organic carrier.

The vegetable oil alkoxylate may be a castor oil alkoxylate. Preferably, the vegetable oil alkoxylate is a castor oil ethoxylate with between 10 mol EO and 50 mol EO, preferably between 35 mol EO and 40 mol EO (each absolute numbers), e.g. 38 mol EO as an average (number average).

Preferably, the alcohol is a linear C₆ alcohol.

Preferably, the oil-based formulation further comprises an active ingredient, wherein the active ingredient preferably is a triazole-type fungicide. Most preferably, the active ingredient is the triazole-type fungicide Propiconazole or the triazole-type fungicide Prothioconazole.

Where the oil-based formulation comprises the active ingredient, the oil-based formulation may be called an agrochemical formulation.

The surfactant may be present in the oil-based formulation in an amount of between 1 wt.% and 20 wt.%, preferably between 5 wt.% and 15 wt.%, most preferably 10 wt.%. The anionic emulsifier and the non-ionic emulsifier may be mixed in a ratio of from 30:70 (w/w) to 70:30 (w/w). Preferably, the anionic emulsifier and the non-ionic emulsifier are mixed in a ratio of from 40:60 (w/w) to 60:40 (w/w).

The alcohol may be present in the anionic emulsifier in an amount of between 10 wt.% and 40 wt.%, preferably between 20 wt.% and 30 wt.%, e.g. 25 wt.%.

The active ingredient may be present in the oil-based formulation in an amount of between 30 wt.% and 60 wt.%, preferably between 40 wt.% and 55 wt.%.

The C₁₀ to C₁₃ linear alkylbenzene organic carrier may be present in the oil-based formulation in an amount of between 15 wt.% and 90 wt.%, preferably between 30 wt.% and 70 wt.%.

### Use of the oil-based formulation or the agrochemical formulation

The oil-based formulation or the agrochemical formulation as hereinbefore described may be used in a variety of applications, including uses which extend beyond agricultural uses, such as: use in home pest control, e.g. in preventing the spread of diseases carried by pets, treating and controlling household pests such as spiders, fleas, ticks, carpenter ants, carpenter bees, cockroaches and bed bugs; in garden protection; in fertilizers; in veterinary medicine for both livestock or domestic animals, such as control ectoparasites which infest cattle, sheep, and poultry or controlling ticks or fleas on dogs and cats.

According to another aspect of the invention, there is provided the use of the oil-based formulation or the agrochemical formulation as hereinbefore described, including for the protection and/or treatment of crops, the protection and/or treatment of seeds, the protection and/or treatment of turf, the protection and/or treatment of soil, for seed coating fertilizers, for home and garden applications, for teat dips and other dairy applications, in veterinary medicine for both livestock or domestic animals.

Preferably, the oil-based formulation or the agrochemical formulation as hereinbefore described is used for the protection and/or treatment of crops and/or the protection and/or treatment of seeds.

The oil-based formulation or the agrochemical formulation may be diluted in water to form an emulsion for use in the protection and/or treatment of crops and/or the protection and/or treatment of seeds.

When used for the protection and/or treatment of crops and/or the protection and/or treatment of seeds, the oil-based formulation or the agrochemical formulation may be diluted in water in a ratio of from 1 vol.% to 15 vol.%, preferably from in a ratio of from 1 vol.% to 10 vol.%, more preferably in a ratio of from 1 vol.% to 3 vol.%, to form the emulsion.

The crops and/or seeds may be selected from the group comprising turf grasses grown for seed and aesthetic or athletic value, wheat, mushrooms, corn, wild rice, peanuts, almonds, sorghum, oats, pecans, apricots, peaches, nectarines, plums, prunes, lemons, cotton, wheat, maize and alfalfa.

### Method of Preparation

According to another embodiment of the invention, there is provided a method of preparing an oil-based formulation, the method comprising:
(a) providing an alkyl aryl sulfonic acid;
(b) neutralising the alkyl aryl sulfonic acid with a neutralising agent comprising an amine, wherein the amine is a mono-, di- or tri-alkanolamine wherein the alkanol within the alkanolamine is ethanol, isopropanol or mixtures thereof, the amine being dissolved in an alcohol, thereby to form an alkyl aryl sulfonate salt of formula (I);
(c) mixing the alkyl aryl sulfonate salt of formula (I) with a non-ionic emulsifier to form a surfactant;
(d) adding an organic carrier to the surfactant, thereby to form the oil-based formulation.

Optionally, the method may further comprise adding an active ingredient. The active ingredient may be added to the organic carrier prior to adding the organic carrier to the surfactant.

Alternatively, the active ingredient may be added to the oil-based formulation after adding the organic carrier to the surfactant. In other words, the active ingredient may be added to the oil-based formation.

Where the oil-based formulation comprises an active ingredient, the oil-based formulation may be called an agrochemical formulation.

The alkyl group of the alkyl aryl sulfonic acid may be a linear alkyl group or a branched alkyl group. Preferably, the alkyl group is a linear alkyl group.

The alkyl group of the alkyl aryl sulfonic acid may be a C₈ to C₁₈ alkyl group. Preferably, alkyl group of the alkyl aryl sulfonic acid is a C₁₀ to C₁₃ alkyl group.

Preferably, the aryl group of the alkyl aryl sulfonic acid is benzene.

The mono-, di- or tri-alkanolamine may be selected from the group comprising ethanolamines, wherein the ethanolamines comprise monoethanolamine, diethanolamine, triethanolamine, or isopropanolamines, wherein the isopropanolamines comprise monoisopropanolamine, diisopropanolamine and triisopropanolamine.

Preferably, the alkanolamine is triethanolamine.

The alcohol may be a linear alcohol, a branched alcohol of a mixture thereof. Preferably, the alcohol is a linear alcohol.

The alcohol may be a C₄ to a C₁₀ alcohol. Preferably, the alcohol is a C₆ alcohol. Most preferably, the alcohol is a linear C₆ alcohol.

The non-ionic emulsifier may be a vegetable oil alkoxylate. The vegetable oil alkoxylate may be a castor oil alkoxylate. The castor oil alkoxylate may be a castor oil ethoxylate, a castor oil propoxylate, a castor oil EO-PO block alkoxylate, a castor oil PO-EO block alkoxylate, or a castor oil which is randomly ethoxylated and propoxylated.

Preferably, the non-ionic emulsifier is a castor oil ethoxylate with between 10 mol EO and 50 mol EO, preferably between 35 mol EO and 40 mol EO (each absolute numbers), e.g. 38 mol EO in average (number average).

The active ingredient may be a fungicide, a pesticide, an insecticide, a herbicide or a mixture thereof.

Preferably, the active ingredient is a fungicide. The fungicide may be a triazole-type fungicide.

Preferably, the fungicide is the triazole-type fungicide Propiconazole or the triazole-type fungicide Prothioconazole.

The organic carrier may be an alkylbenzene, an aromatic ester, a di-alkyl ether, an aryl or mixtures thereof. Preferably, the organic carrier is a linear alkylbenzene.

The alkylbenzene may be of the formula (II): 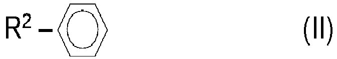 where R² is an alkyl group or an aryl group.

R² may be a linear alkyl group, a branched alkyl group or a mixture thereof. Preferably, R² is a linear alkyl group, so that the organic carrier is a linear alkylbenzene.

Preferably, R² is a C₁₀ to a C₁₇ linear alkyl group. More preferably, R² is a C₁₀ to C₁₃ linear alkyl group.

Examples of linear alkylbenzene include those commercially available under the trade names ISORCHEM 113 and HYBLENE 113.

The aromatic ester may be an aromatic ester of an alcohol, the aromatic ester being of the formula (III-a)

Ar³-COOR³ (III-a)

or of the formula (III-b)

R³COO-Ar³ (III-b)

where R³ is a C₇ to C₃₆ alkyl group, preferably a C₁₂ to C₁₅ alkyl group, and Ar³ is an aromatic group.

R³ may be a linear alkyl group, a branched alkyl group or a mixture thereof. Preferably, R₃ₘ is a linear alkyl group.

Preferably, R³ is a C₁₂ to C₁₅ linear alkyl group.

Preferably, Ar³ is a benzene group.

The alcohol group of the aromatic ester may be derived from oxo alcohols, Guerbet alcohols, Ziegler alcohols, natural alcohols derived from natural oils, or any combination of oxo alcohols, Guerbet alcohols, Ziegler alcohols and natural alcohols derived from natural oils.

Where the alcohol group of the aromatic ester is derived from oxo alcohols, the oxo alcohol may be branched oxo alcohol, linear oxo alcohol or mixtures thereof. The oxo alcohols may be C₉ to C₁₇ oxo alcohols.

Where the alcohol group of the aromatic ester is derived from Guerbet alcohols, the Guerbet alcohols may be C₁₂ to C₃₆ Guerbet alcohols.

Where the alcohol group of the aromatic ester is derived from Ziegler alcohols, the Ziegler alcohols may be C₆ to C₂₈ alcohols.

Where the alcohol group of the aromatic ester is derived from natural alcohols derived from natural oils, the natural oils may be vegetable oils.

Examples of aromatic (benzoic) esters include those commercially available under the trade name CEREWIN S.

The di-alkyl ether may be of the formula (IV):

R^{4a}-O-R^{4b}

where R^{4a} and R^{4b} are independently each alkyl groups.

R^{4a} and R^{4b} may be independently each a linear alkyl group or a branched alkyl group or a mixture thereof. Preferably, R^{4a} and R^{4b} may be independently each a linear alkyl group.

R^{4a} and R^{4b} may be independently each a C₆ to a C₁₂ alkyl group. Preferably, R^{4a} and R^{4b} are independently each a C₆ alkyl group.

Examples of di-alkyl ethers include those commercially available under the trade name NACOL ETHER 6.

The oil-based formulation or the agrochemical formulation may be an emulsifiable concentrate, a suspo-concentrate, a suspo-emulsion, an oil dispersion, a micro emulsion or a micro emulsion concentrate. Preferably, the oil-based formulation or the agrochemical formulation is an emulsifiable concentrate or a micro emulsion concentrate. Most preferably, the oil-based formulation or the agrochemical formulation is an emulsifiable concentrate.

Many oil-based formulations comprise an added solvent or diluent. The added solvent or diluent is typically a glycol-type solvent or diluent, e.g. 1,2-dipropandiol. Typically, the added solvent or diluent is used to adjust the viscosity of the oil-based formulation. However, the oil-based formulation or the agrochemical formulation of the present invention does not require any such added solvent or diluent to adjust the viscosity thereof and preferably glycol-type and diol solvents are absent.

The surfactant may be present in the oil-based formulation in an amount of between 1 wt.% and 20 wt.%, preferably between 5 wt.% and 15 wt.%, most preferably 10 wt.%.

The alcohol may be present in the neutralising agent in an amount of between 10 wt.% and 50 wt.%, preferably between 20 wt.% and 40 wt.%, e.g. 30 wt.%.

The alcohol may be present in the anionic emulsifier in an amount of between 10 wt.% and 40 wt.%, preferably between 20 wt.% and 30 wt.%, e.g. 25 wt.%.

The anionic emulsifier and the non-ionic emulsifier may be mixed in a ratio of from 30:70 (w/w) to 70:30 (w/w). Preferably, the anionic emulsifier and the non-ionic emulsifier are mixed in a ratio of about 40:60 (w/w) to 60:40 (w/w).

The organic carrier may be present in the oil-based formulation in an amount of between 15 wt.% and 90 wt.%, preferably between 30 wt.% and 50 wt.%.

The active ingredient may be present in the oil-based formulation in an amount of between 30 wt.% and 60 wt.%, preferably between 40 wt.% and 55 wt.%.

### Advantages of the invention

Advantageously, the oil-based formulation comprises an active ingredient and is used as an agrochemical formulation.

The oil-based formulation of the present application remains stable in oil-in-water emulsions and has superior pesticide solvability over compositions of the prior art.

The agrochemical formulation of the present application improves both the availability and efficacy of pesticide active ingredients therein.

The oil-based formulation and the agrochemical formulation of the present application have fewer components or compounds therein, yet have at least as favourable viscosity and oil/water emulsion performance, relative to conventional agrochemical formulations based on Ca-DDBSA.

The oil-based formulation of the present invention performs well as a carrier for pesticide active ingredients, providing an improved handling profile, improved human toxicity and less odour, as well as improved flammability classification in final agrochemical applications.

Additionally, the organic carrier of the oil-based formulation and the agrochemical formulation has an improved ability to disperse/dissolve the active ingredient. In combination with the surfactant of the oil-based formulation, improved emulsions are formed for final agricultural applications.

The active ingredient may be a pesticide, a fungicide, an insecticide, a herbicide or a mixture thereof.

### EXPERIMENTS

The invention will now be described with reference to the following non-limiting examples.

### Preparation of Anionic Emulsifiers

Various anionic emulsifiers were produced, as indicated in Table A below. The anionic emulsifiers were all produced at room temperature (ca. 20°C).

For anionic emulsifiers comprising C₁₀-C₁₃ LASTEA salts (anionic emulsifiers AE.1, AE.3, AE.6 and AE.8), the LASTEA salt was prepared as follows:
(i) 44g triethanolamine was dissolved in 40g linear C₆ alcohol (hexanol) to form a triethanolamine/alcohol alkaline solution;
(ii) C₁₀-C₁₃ linear alkyl benzene sulfonic acid was added to the triethanolamine/alcohol alkaline solution to make a mixture with a ratio of 70 wt.% C₁₀-C₁₃ linear alkyl benzene and 30 wt.% triethanolamine/alcohol alkaline solution;
(iii) in order to neutralize the C₁₀-C₁₃ linear alkyl benzene sulfonic acid in the triethanolamine/alcohol alkaline solution, sulfonic acid was added while the solution was stirred, until a final pH in the range of 6 to 7 was reached.

The resulting C₁₀-C₁₃ linear alkyl benzene sulfonate-triethanolamine (LASTEA) salt had the appearance at 20°C of an amber, clear and bright solution.

Anionic emulsifier AE.4 was prepared by mixing a commercially available calcium salt of dodecyl benzene sulfonic acid (CaDDBSA) with n-butanol and 1,2-propandiol. CaDDBSA has a cloudy appearance and sedimentation was observed during storage.

The dynamic viscosity of the anionic emulsifiers is reflected in Table B.

**Table A: Anionic Emulsifiers (wt.%)**

| | AE.1 | AE.3 | AE.4 | AE.6 | AE.8 |
|---|---|---|---|---|---|
| C₁₀-C₁₃ LASTEA salt | 70 | 70 | | 70 | 52 |
| Calcium salt of dodecyl benzene sulfonic acid (CaDDBSA) | | | 70 | | |
| Hexanol | 30 | | | | |
| n-Butanol | | 30 | 25 | | |
| 1,2-propandiol | | | 5 | | |
| Linear alcohol C₈-7EO | | | | 30 | |
| Water | | | | | 48 |

**Table B: Dynamic viscosity of anionic emulsifiers (cP)**

| | **0°C** | **10°CB** | **20°C** | **25°C** | **30°C** | **40°C** | **50°C** | **60°C** |
|---|---|---|---|---|---|---|---|---|
| AE.1 | 2623,2 | 1247,0 | 621,82 | 450,5 | 333,01 | 191,74 | 117,53 | 75,978 |
| AE.3 | 3776,8 | 1572,7 | 735,54 | 522,13 | 379,08 | 212,03 | 127,11 | 80,790 |
| AE.4 | n.m. | 4230,9 | 2175,8 | 1604,9 | 1204,4 | 709,46 | 441,17 | 287,33 |
| AE.6 | not measurable - paste | | | | | | | |
| AE.8 | n.m. | n.m. | 2900,7 | 2003,9 | 1406,8 | 724,39 | 393,23 | 223,91 |

| | | | | | | | | |
|---|---|---|---|---|---|---|---|---|
| [n.m. = not measurable due to high viscosity of the anionic emulsifier] | | | | | | | | |

### Preparation of Surfactant (Anionic Emulsifier + Non-ionic emulsifier)

Non-ionic emulsifier (EM) in the form of castor oil ethoxylate 38EO moles was added to the each of the anionic emulsifiers, such that a final blend of 40 wt.% anionic emulsifier and 60 wt.% of non-ionic emulsifier was obtained, as set out in Table C. The viscosity the surfactants is shown in Table D.

**Table C: Surfactant (anionic emulsifier + non-ionic emulsifier) (wt.%)**

| | SURF.1 | SURF.3 | SURF.4 | SURF.6 | SURF.8 |
|---|---|---|---|---|---|
| Castor oil 38EO (EM) | 60 | 60 | 60 | 60 | 60 |
| AE.1 | 40 | - | - | - | - |
| AE.3 | - | 40 | - | - | - |
| AE.4 | - | - | 40 | - | - |
| AE.6 | - | - | - | 40 | - |
| AE.8 | - | - | - | - | 40 |

### Example 1: Preparation of surfactant SURF.4

32g of AE.4 was added to 48g of castor oil ethoxylate 38EO moles (non-ionic surfactant) and the solution mixed for about 10 minutes. A cloudy, rusty coloured solution was obtained.

### Example 2: Preparation of surfactants SURF.1 and SURF.3

44g of triethanolamine was dissolved in 40g of hexanol. The triethanolamine/hexanol mixture was homogenised by stirring for 5 minutes. Then 70g of C₁₀-C₁₃ linear alkylbenzene sulfonic acid was slowly added, while stirring, to avoid a strong exothermic neutralisation reaction. After addition of the C₁₀-C₁₃ linear alkylbenzene sulfonic acid, the mixture was stirred for 10 minutes. The pH of the mixture was adjusted with triethanolamine or sulfonic acid, as appropriate, to a target range of between 6 and 7 to obtain the anionic emulsifier AE.1.

32g of AE.1 was added to 48g of castor oil ethoxylate 38 EO moles (non-ionic emulsifier) and the resulting surfactant mixed for about 10 minutes. A clear, amber solution was obtained (SURF. 1).

To obtain SURF. 3, a similar procedure was followed, except that triethanolamine was first dissolved in 40g butanol to form AE.3 before mixing 32g of AE.3 with 48g of castor oil ethoxylate 38EO (non-ionic emulsifier) to form SURF. 3.

### Example 3: Preparation of surfactant SURF.6

44g triethanolamine was dissolved in 40g linear alcohol C₈-7EO and the triethanolamine/linear alcohol C₈-7EO mixture was homogenised by stirring for 5 minutes. Then, 70g of C₁₀-C₁₃ linear alkylbenzene sulfonic acid was slowly added, while stirring, to avoid strong exothermic neutralization reaction. A gel was obtained. The gel was homogenised and the pH was adjusted with triethanolamine or sulfonic acid, as appropriate, to a target range of between 6 and 7 to obtain the anionic emulsifier AE.6.

32g of AE.6 was added with 48g castor oil ethoxylate 38EO moles (non-ionic emulsifier) and mixed for 10 minutes. A cloudy gel was obtained.

### Example 4: Preparation of surfactant SURF.8

A commercial sample of C₁₀-C₁₃ LASTEA salt at 50 wt.% in water, available under the trade name MARLOPON AT 50, was used. MARLOPON AT 50 has clear, amber appearance.

32g of MARLOPON AT 50 was added to 48g of castor oil ethoxylate 38EO moles (non-ionic emulsifier) and mixed for 10 minutes. A cloudy, viscous liquid was obtained.

**Table D: Viscosity of Surfactant (40 wt.% anionic emulsifier / 60 wt.% non-ionic emulsifier)**

| Dynamic viscosity (cP) | | | | | | | |
|---|---|---|---|---|---|---|---|
| | 10°C | 20°C | 25°C | 30°C | 40°C | 50°C | 60°C |
| SURF.1 | 1008,7 | 498,18 | 362,20 | 271,90 | 162,63 | 103,97 | 70,315 |
| SURF.3 | 1167,3 | 561,97 | 407,23 | 304,44 | 180,44 | 114,67 | 77,107 |
| SURF.4 | 1916,2 | 940,95 | 682,65 | 507,07 | 296,31 | 185,44 | 122,84 |
| SURF.6 | n.m. | 728,20 | 526,86 | 391,34 | 227,78 | 143,69 | 95,996 |
| SURF.8 | 1802,6 | 827,96 | 585,45 | 424,42 | 237,97 | 143,34 | 91,714 |

| | | | | | | | |
|---|---|---|---|---|---|---|---|
| [n.m. = not measurable due to high viscosity of the surfactant] | | | | | | | |

### Preparation of Oil Concentrate (Organic Carrier + Active Ingredient)

Various oil concentrates were prepared by mixing an amount of active ingredient (Propiconazole) with an organic carrier in a vial. The weights of each component in each oil concentrate (OC) are shown in Table E. The vial was sealed and blended via mixing using VORTEX equipment. Blending the active ingredient and organic carrier was done by static/continuous mixing of the components, warming the mixture up to 50°C, where necessary to achieve proper dissolution and to obtain a clear and bright solution.

**Table E: Oil Concentrate (Organic Carrier & Active Ingredient) (wt.%)**

| Oil Concentrate | OC.2 | OC.3 | OC.4 | OC.5 | OC.6 | OC.7 | OC.2a | OC.3a | OC.4a |
|---|---|---|---|---|---|---|---|---|---|
| Propiconazole tech 95 wt.% | 46,4 | 46,4 | 46,4 | 46,4 | 46,4 | 46,4 | 60,0 | 60,0 | 60,0 |
| C₁₂-C₁₅ benzoic ester | 53,6 | - | - | - | - | - | 40,0 | - | - |
| C₆ dialkyl ether | - | 53,6 | - | - | - | - | - | 40,0 | - |
| C₁₀-C₁₃ linear alkylbenzene | - | - | 53,6 | - | - | - | - | - | 40,0 |
| C₉ aromatic | - | - | - | 53,6 | - | - | - | - | - |
| Hexyl benzoate | - | - | - | - | 53,6 | - | - | - | - |
| Ethyl benzoate | - | - | - | - | - | 53,6 | - | - | - |

### Preparation of Emulsifiable Concentrate (41.8 wt.% active ingredient)

Various emulsifiable concentrates were prepared, as follows:
(i) an organic carrier was mixed with an active ingredient;
(ii) the resulting oil concentrate (OC) was stirred at room temperature until a stable, clear and bright mixture was obtained, if necessary, the oil concentrate was warmed up to 50°C to achieve a stable, clear and bright mixture;
(iii) a surfactant was added to the oil concentrate and stirred for 2-3 minutes to produce an emulsifiable concentrate (EC);
(iv) where CaDDBSA was used as the anionic emulsifier in the surfactant, 1,2-propandiol was also added prior to stirring;
(v) the appearance of the emulsifiable concentrate (EC) was observed.

Table F shows emulsifiable concentrate (EC) formulations (wt.%) formulated from oil concentrates comprising active ingredient Propiconazole in a C₉ aromatic oil commercially available under the trade name SOLVESSO ND (an industry standard solvent for formulating Propiconazole), with various surfactants.

**Table F: Emulsifiable Concentrate (EC) formulations using Propiconazole at 41.8 wt.% in commercially available C₉ aromatic oil (wt.%)**

| | EC.1 | EC.3 | EC.4 | EC4.1 | EC.14 | EC.16 |
|---|---|---|---|---|---|---|
| Propiconazole 95 wt.% tech | 41,8 | 41,8 | 41,8 | 41,0 | 41,8 | 41,8 |
| C₉ aromatic oil | 48,2 | 48,2 | 48,2 | 47,3 | 48,2 | 48,2 |
| 1,2-propandiol | | | | 1,9 | | |
| SURF.1 | 10 | | | | | |
| SURF.3 | | 10 | | | | |
| SURF.4 | | | 10 | 9,8 | | |
| SURF.6 | | | | | 10 | |
| SURF.8 | | | | | | 10 |
| Appearance | Clear liquid | Clear liquid | Clear liquid | Clear, viscous liquid | Clear liquid | Clear liquid |

Table G shows emulsifiable concentrate (EC) formulations (wt.%) from oil concentrates comprising active ingredient Propiconazole in organic carriers of the invention, with surfactants SURF.1 or SURF.4

**Table G: Emulsifiable Concentrate (EC) formulations using Propiconazole at 41.8 wt.% in organic carriers of the invention (wt.%)**

| | | EC.8 | EC.9 | EC.9.2 | EC.10 | EC.11 | EC.11.1 | EC.12 | EC.13 | EC.13. 1 |
|---|---|---|---|---|---|---|---|---|---|---|
| Propiconazole 95 wt.% tech | OC.2 | 41,8 | 41,8 | 40,5 | | | | | | |
| C₁₂-C₁₅ benzoic ester | | 48,2 | 48,2 | 46,8 | | | | | | |
| Propiconazole 95 wt.% tech | OC.3 | | | | 41,8 | 41,8 | 41,4 | | | |
| C₆ dialkyl ether | | | | | 48,2 | 48,2 | 47,7 | | | |
| Propiconazole 95 wt.% tech | OC.4 | | | | | | | 41,8 | 41,8 | 41,4 |
| C₁₀-C₁₃ linear alkylbenzene | | | | | | | | 48,2 | 48,2 | 47,7 |
| 1,2-propandiol | | | | 2,9 | | | 1,0 | | | 1,0 |
| SURF.1 | | 10 | | | 10 | | | 10 | | |
| SURF.4 | | | 10 | 9,7 | | 10 | 9,8 | | 10 | 9,8 |
| Appearance | | Clear liquid | Cloudy paste | Clear, viscous liquid | Clear liquid | Cloudy Paste | Clear, viscous liquid | Clear liquid | Cloudy viscous liquid | Clear, viscous liquid |

Table H shows the dynamic viscosity profile (mPA.s) of ECs prepared at 41.8 wt.% active ingredient Propiconazole

**Table H: Dynamic viscosity profile (mPA.s) of ECs prepared at 41 wt.% Active ingredient Propiconazole**

| | 0°C | 10°C | 20°C | 25°C | 30°C | 40°C | 50°C | 60°C |
|---|---|---|---|---|---|---|---|---|
| EC 8 4060 | 591,89 | 239,84 | 112,70 | 80,890 | 59,638 | 34,810 | 22,039 | 14,882 |
| EC 9 4060 | Not measurable - gel phase | | | | | | | |
| EC 9.2 4060 | 604,41 | 245,73 | 115,39 | 82,760 | 60,965 | 35,471 | 22,344 | 15,017 |
| EC 10 4060 | n.a. | 26,994 | 15,692 | 12,476 | 10,148 | 7,0372 | 5,1594 | 3,9433 |
| EC 11 4060 | Not measurable - gel phase | | | | | | | |
| EC 11.2 4060 | n.a. | 26,810 | 15,641 | 12,416 | 10,069 | 6,9693 | 5,0963 | 3,8852 |
| EC 12 4060 | 313,32 | 130,17 | 63,135 | 46,095 | 34,559 | 20,830 | 13,565 | 9,3934 |
| EC 13 4060 | Not measurable - gel phase | | | | | | | |
| EC 13.1 4060 | 321,13 | 132,92 | 64,230 | 46,791 | 35,010 | 21,009 | 13,608 | 9,3732 |

Table I shows the compositions of the EC formulations of Examples 5 to 12 which were prepared from oil concentrates comprising active ingredient Propiconzole at 41.8 wt.% active ingredient (a commercial standard pesticide concentration) and organic carriers of the invention, with surfactants SURF.1 or SURF.4.

**Table I: Compositions of EC formulations using active ingredient Propiconazole at 41.8 wt.% in organic carriers of the invention**

| | Organic Carrier | Active Ingredient (Propiconazole tech 95 wt.%) | Surfactant | 1,2-propandiol | Appearance of EC |
|---|---|---|---|---|---|
| Example 5 EC.8 | 7.23g C₁₂-C₁₅ benzoic ester | 6.27g | 1.5g SURF.1 | - | Clear liquid |
| Example 6 EC.9.2 | 7.09g C₁₂-C₁₅ benzoic ester | 6.15g | 1.47g SURF.4 | 0.29g | Clear, viscous liquid |
| Example 7 EC.10 | 7.23g C₆ dialkyl ether | 6.27g | 1.50g SURF.1 | - | Clear liquid |
| Example 8 EC.11.1 | 7.09g C₆ dialkyl ether | 6.15g | 1.47g SURF.4 | 0.29g | Clear, viscous liquid |
| Example 9 EC.12 | 7.23g C₁₀-C₁₃ linear alkylbenzene | 6.27g | 1.50g SURF.1 | - | Clear liquid |
| Example 10 EC.13.1 | 7.09g C₁₀-C₁₃ linear alkylbenzene | 6.15g | 1.47g SURF.4 | 0.29g | Clear, viscous liquid |
| Example 11 EC.1 | 7.23g C₉ aromatic | 6.27g | 1.50g SURF.1 | | Clear liquid |
| Example 12 EC.4.1 | 7.09g C₉ aromatic | 6.15g | 1.47g SURF.4 | 0.29g | Clear, viscous liquid |

### Preparation of Emulsifiable Concentrate (54 wt.% active ingredient)

Various ECs were prepared according to the method described above, however, 54 wt.% active ingredient was used. Table J shows the emulsion concentrate formulations of Examples 17 to 22 which were prepared at 54 wt.% active ingredient using the organic carriers of the invention.

**Table J: EC formulations at using Propiconazole at 54 wt.% active ingredient using organic carrier of the invention**

| | Organic Carrier | Active Ingredient (Propiconazole tech 95 wt.%) | Surfactant | 1,2-propandiol | Appearan ce of EC |
|---|---|---|---|---|---|
| Example 17 EC.c | 5.40g C₁₂-C₁₅ benzoic ester | 8.10g | 1.50g SURF.1 | - | Clear liquid |
| Example 18 EC.d.1 | 5.30g C₁₂-C₁₅ benzoic ester | 7.94g | 1.47g SURF.4 | 0.29g | Cloudy paste |
| Example 19 EC.e | 5.40g C₆ dialkyl ether | 8.10g | 1.50g SURF.1 | - | Clear liquid |
| Example 20 EC.f.2 | 5.30g C₆ dialkyl ether | 7.94g | 1.47g SURF.4 | 0.29g | Clear, viscous liquid |
| Example 21 EC.g | 5.40g C₁₀-C₁₃ linear alkylbenzene | 8.10g | 1.50g SURF.1 | - | Clear liquid |
| Example 22 EC.h.2 | 5.30g C₁₀-C₁₃ linear alkylbenzene | 7.94g | 1.47g SURF.4 | 0.29g | Clear, viscous liquid |

Table K shows emulsifiable concentrate (EC) formulations (wt.%) using active ingredient Propiconazole prepared at 54 wt.% in organic carriers of the invention.

**Table K: Emulsifiable Concentrate (EC) formulations using Propiconazole at 54 wt.% in organic carriers of the invention (wt.%)**

| | | EC.c | E.d | EC.d.1 | EC.e | EC.f | EC.f.2 | EC.g | EC.h | EC.h.2 |
|---|---|---|---|---|---|---|---|---|---|---|
| Propiconazole tech | OC.2a | 54 | 54 | 53,5 | | | | | | |
| C₁₂-C₁₅ benzoic ester | | 36 | 36 | 35,7 | | | | | | |

| | | EC.c | E.d | EC.d.1 | EC.e | EC.f | EC f.2 | EC.g | EC.h | EC.h. 2 |
|---|---|---|---|---|---|---|---|---|---|---|
| Propiconazole tech | OC.3a | | | | 54 | 54 | 52,4 | | | |
| C₆ dialkyl ether | | | | | 36 | 36 | 34,9 | | | |
| Propiconazole tech | OC.4a | | | | | | | 54 | 54 | 53,0 |
| C₁₀-C₁₃ linear alkylbenzene | | | | | | | | 36 | 36 | 35,2 |
| 1,2-propandiol | | | | 1,0 | | | 3,0 | | | 2,0 |
| SURF.1 | | 10 | | | 10 | | | 10 | | |
| SURF.4 | | | 10 | 9,8 | | 10 | 9,7 | | 10 | 9,8 |
| Appearance | | Clear liquid | Cloudy Viscous liquid | Cloudy paste | Clear liquid | Cloudy Paste | Clear, viscous liquid | Clear liquid | Cloudy Viscous liquid | Clear, viscous liquid |

The dynamic viscosity of the ECs prepared at 54 wt.% Propiconazole is shown in the Table L below.

**Table L: Dynamic viscosity profile (mPA.s) of ECs prepared at 54 wt.% Active ingredient Propiconazole**

| | 0°C | 10°C | 20°C | 25°C | 30°C | 40°C | 50°C | 60°C |
|---|---|---|---|---|---|---|---|---|
| EC.c | 1768,6 | 602,16 | 244,11 | 164,83 | 115,40 | 61,272 | 35,880 | 22,767 |
| EC.d.1 | Not measurable - cloudy paste | | | | | | | |
| EC.e | 164,99 | 70,871 | 36,287 | 27,253 | 21,023 | 13,359 | 9,1133 | 6,5663 |
| EC.f.2 | 179,16 | 77,161 | 39,433 | 29,556 | 22,742 | 14,366 | 9,7296 | 6,9611 |
| EC.g | 958,16 | 334,35 | 140,67 | 96,593 | 68,567 | 37,590 | 22,641 | 14,720 |
| EC.h.2 | 1011,3 | 352,65 | 148,14 | 101,61 | 71,994 | 39,316 | 23,577 | 15,251 |

### Comparative Examples

US 6,635,663 describes a pesticide emulsifiable concentrate which contains an aromatic ester solvent wherein the alkyl group of the ester is C₁ to C₆.

Emulsifiable concentrates was prepared using the organic carriers hexyl benzoate and ethyl benzoate, within the scope of US 6,635,663. The formulations prepared are set out in Tables M and N below. The dynamic viscosity profile the formulations is shown in Table O.

**Table M: EC formulations based on 41.8 wt.% active ingredient using aromatic ester solvents described in US 6,635,663 (wt.%)**

| | | EC.17 | EC.18 | EC.18.1 | EC.19 | EC.20 | EC.20.1 |
|---|---|---|---|---|---|---|---|
| Propiconazole 95 wt.% tech | OC.6 | 41,8 | 41,8 | 41,0 | | | |
| Hexyl benzoate | | 48,2 | 48,2 | 47,3 | | | |
| Propiconazole 95 wt.% tech | OC.7 | | | | 41,8 | 41,8 | 41,0 |
| Ethyl benzoate | | | | | 48,2 | 48,2 | 47,3 |
| 1,2-propandiol | | | | 1,9 | | | 1,9 |
| SURF.1 | | 10 | | | 10 | | |
| SURF.4 | | | 10 | 9,8 | | 10 | 9,8 |
| Appearance | | Clear liquid | Cloudy paste | Clear, viscous liquid | Clear liquid | Cloudy paste | Clear, viscous liquid |

**Table N: EC formulations based on 41.8 wt.% active ingredient using aromatic ester solvents described in US 6,635,663 (wt.%)**

| | Organic Carrier | Active Ingredient (Propiconazole tech 95 wt.%) | Surfactant | 1,2-propandiol | Appearance of EC |
|---|---|---|---|---|---|
| Example 13 EC.17 | 7.23g hexyl benzoate | 6.27g | 1.50g SURF.1 | - | Clear liquid |
| Example 14 EC.18.1 | 7.09g hexyl benzoate | 6.15g | 1.47g SURF.4 | 0.29g | Clear, viscous liquid |
| Example 15 EC.19 | 7.23g ethyl benzoate | 6.27g | 1.50g SURF.1 | - | Clear liquid |
| Example 16 EC.20.1 | 7.09g ethyl benzoate | 6.15g | 1.47g SURF.4 | 0.29g | Clear, viscous liquid |

**Table O: Dynamic viscosity profile (cP)**

| | 0°C | 10°C | 20°C | 25°C | 30°C | 40°C | 50°C | 60°C |
|---|---|---|---|---|---|---|---|---|
| EC.17 | 183,29 | 84,360 | 44,282 | 33,469 | 25,900 | 16,482 | 11,217 | 8,0861 |
| EC.18.1 | 183,86 | 84,630 | 44,314 | 33,471 | 25,823 | 16,387 | 11,146 | 7,9652 |
| EC.19 | 75,714 | 38,431 | 22,150 | 17,454 | 14,059 | 9,5879 | 6,9243 | 5,2254 |
| EC.20.1 | 77,905 | 39,439 | 22,659 | 17,808 | 14,287 | 9,7046 | 6,9802 | 5,2425 |

The emulsion concentrates prepared according to US 6,635,663 had a characteristic ester odour due to the low molecular weight of the C₁-C₆ alky group and a low threshold odour, in comparison EC formulations based on C₁₂-C₁₅ benzoic esters of the invention.

### Emulsion Performance

Each emulsifiable concentrate was tested for emulsion performance, including oil-water emulsion ability (bloom test) and emulsion stability over time, according to the following methods.

### Oil-water emulsion ability (bloom and emulsion test)

The oil-water emulsion ability of the EC formulations was tested by evaluating the emulsion spontaneity and the stability of the emulsion in water of various hardness (content of CaCl₂).

Bloom and emulsion test procedures are widely applicable emulsifiable concentrate and oil-based formulations which separate on dilution with water in oil-in-water emulsions.

The bloom and emulsion test requires mixing 1 vol% of an emulsion concentrate with 99 vol% of a standard quality water to give 100 ml of oil-water emulsion. The oil-water emulsion is ranked by spontaneity of the emulsion as well as the stability of the emulsion. Emulsion stability is assessed in terms of the amount of "oil" or "cream" which floats on the water surface, as well as the clarity of the solution over the time.

The bloom and emulsion test is performed in a glass cylinder of 100 ml capacity, which is clean and free form oil or grease. The cylinder is filled to 99 ml with standard hard water solutions and 1ml of the emulsion concentrate being tested is added. The oil-water emulsion spontaneity of the oil concentrate is evaluated in various hardness of water solutions, noting whether the oil has exhibited a "bloom effect" (i.e. is rapidly emulsified) in the hard water solutions.

The glass cylinder is then corked and inverted gently 10 times over a period of about 20 seconds. The corked cylinder is left to stand for 48 hours on a flat surface. After 30 minutes, 1 hour, 2 hours, 24 hours and 48 hours, "oil" or "cream" on the surface is measured and the clarity of the solution is measured. The clarity of the solution describes how much of clear the solution is present at the surface due to sedimentation of the emulsion. Clarity is expressed in millilitre of clear solution on top of the column of liquid.

Any sediment on the bottom of the corked glass cylinder at 30 minutes, 1 hour, 2 hour and 24 hours is measured. After 24 hours the corked glass cylinder is again inverted 10 times and the degree of sedimentation is evaluated.

The degree of sedimentation is described as: (i) stable emulsion (no sedimentation); (ii) light sedimentation (L), where after up to 4 revolutions of the glass cylinder the sedimentation is re-dispersed into the solution; (iii) medium sedimentation (M), where after between 5 and 10 revolutions there is no longer sedimentation on the bottom of the cylinder; and (iii) high (H), where sediment it is still present on the bottom of the glass cylinder after 10 revolutions. After an additional 24 hours the emulsion stability and the sedimentation are again measured, described above.

### Preparation of CaCl₂ solution (hardness of water)

Emulsion spontaneity and stability of emulsion concentrates have been defined in standard hard water solutions. The hard water solutions were prepared using the method CIPAC MT 18.1 as guideline, with the following modifications:
*Standard water 34 ppm CaCl₂:* weigh 34.2 mg of CaCl₂ in a beaker, dissolve the CaCl₂ powder with demineralised water and then transfer the whole amount of dissolved CaCl₂ using demineralized water to a flask of 1 litre capacity. Fill to the flask to 1 litre with demineralized water.

*Standard water 342 ppm CaCl₂:* weigh 342 mg of CaCl₂ in a beaker, dissolve the CaCl₂ powder with demineralised water and then transfer the whole amount of dissolved CaCl₂ using demineralized water to a flask of 1 litre capacity. Fill to the flask to 1 litre with demineralized water.

*Standard water 1000ppm CaCl₂:* weigh 1000mg of CaCl₂ in a beaker, dissolve the CaCl₂ powder with demineralised water and then transfer the whole amount of dissolved CaCl₂ using demineralized water to a flask of 1 litre capacity. Fill to the flask to 1 litre with demineralized water.

Each of the EC formulations of Example 5 to Example 12 were tested for emulsion spontaneity and emulsion stability, as described above, by adding the EC formulations to the each of the hard water solutions prepared by the method described above. The results of the spontaneity and stability of the oil-water emulsion obtained are shown in Table P.

**Table P: Emulsion spontaneity and emulsion stability (ECs with 41.8 wt.% active ingredient)**

| EC formulation / H2O type | T 0 | T 30 min. | T 1h | T 2h | T 24h | T 48h | Bloom |
|---|---|---|---|---|---|---|---|
| | clearness (ml) | clearness (ml) | clearness (ml) | clearness (ml) | Clearness (ml)/ Solid | clearness (ml) / Solid | |
| EC 1 - 34,2 ppm | 0 | 0 | 0 | 0 | 0/L | 0/L | yes |
| EC 1 - 342 ppm | 0 | 0 | 0 | 0 | 0/L | 0/L | yes |
| EC 1 - 1000 ppm | 0 | 0 | 0 | 0 | 0/L | 0/L | yes |
| EC 3 - 34,2 ppm | 0 | 0 | 0 | 0 | 0/L | 0/L | yes |
| EC 3 - 342 ppm | 0 | 0 | 0 | 0 | 0/L | 0/L | yes |
| EC 3 - 1000 ppm | 0 | 0 | 0 | 0 | 0/L | 0/L | yes |
| EC 4 - 34,2 ppm | 0 | 0 | 0 | 0 | 0/L | 0/L | yes |
| EC 4 - 342 ppm | 0 | 0 | 0 | 0 | 0/L | 0/L | yes |
| EC 4 - 1000 ppm | 0 | 0 | 0 | 0 | 0/L | 0/L | yes |
| EC 8 - 34,2 ppm | 0 | 0 | 0 | 0 | stable | stable | yes |
| EC 8 - 342 ppm | 0 | 0 | 0 | 0 | stable | stable | yes |
| EC 8 - 1000 ppm | 0 | 0 | 0 | 0 | stable | stable | yes |
| EC 9 - 34,2 ppm | 0 | 0 | 0 | 0 | stable | stable | yes |
| EC 9 - 342 ppm | 0 | 0 | 0 | 0 | stable | stable | yes |
| EC 9 - 1000 ppm | 0 | 0 | 0 | 0 | stable | stable | yes |
| EC 9.2 - 34,2 ppm | 0 | 0 | 0 | 0 | stable | stable | yes |
| EC 9.2 - 342 ppm | 0 | 0 | 0 | 0 | stable | stable | yes |
| EC 9.2 - 1000 ppm | 0 | 0 | 0 | 0 | stable | stable | yes |
| EC 10 - 34,2 ppm | 0 | 0 | 0 | oil phase on the surface | oil phase on the surface/L(*) | oil phase on the surface/L(*) | yes |
| EC 10 - 342 ppm | 0 | 0 | 0 | oil phase on the surface | oil phase on the surface/L(*) | oil phase on the surface/L(*) | yes |
| EC 10 - 1000 ppm | 0 | 0 | 0 | oil phase on the surface | oil phase on the surface/L (*) | oil phase on the surface/L (*) | yes |
| EC 11.1 - 34,2 ppm | 0 | 0 | 0 | oil phase on the surface | oil phase on the surface/L (*) | oil phase on the surface/L (*) | yes |
| EC formulation / H O type | T 0 | T 30 min. | T 1h | T 2h | T 24h | T 48h | Bloom |
| EC 11.1 - 342 ppm | 0 | 0 | 0 | oil phase on the surface | oil phase on the surface/L (*) | oil phase on the surface/L (*) | yes |
| EC 11.1-1000 ppm | 0 | 0 | 0 | oil phase on the surface | oil phase on the surface/L (*) | oil phase on the surface/L (*) | yes |
| EC 12 - 34,2 ppm | 0 | 0 | 0 | 0 | 0/L | 0/L | yes |
| EC 12 - 342 ppm | 0 | 0 | 0 | 0 | 0/L | 0/L | yes |
| EC 12 - 1000 ppm | 0 | 0 | 0 | 0 | 0/L | 0/L | yes |
| EC 13.1-34,2 ppm | 0 | 0 | 0 | 0 | 0/L | 0/L | yes |
| EC 13.1-342 ppm | 0 | 0 | 0 | 0 | 0/L | 0/L | yes |
| EC 13.1-1000 ppm | 0 | 0 | 0 | 0 | 0/L | 0/L | yes |
| EC 14 - 34,2 ppm | 0 | 0 | 0 | 0 | 0/L | 0/L | yes |
| EC 14 - 342 ppm | 0 | 0 | 0 | 0 | 0/L | 0/L | yes |
| EC 14 - 1000 ppm | 0 | 0 | 0 | 0 | 0/L | 0/L | yes |
| EC 16 - 34,2 ppm | 0 | 0 | 0 | 0 | 5/L | 5/L | yes |
| EC 16 - 342 ppm | 0 | 0 | 0 | 0 | 5/L | 5/L | yes |
| EC 16 - 1000 ppm | 0 | 0 | 0 | 0 | 0/L | 0/L | yes |
| EC 17 - 34,2 ppm | 0 | 0 | 0 | 0 | 0/L | 0/L | yes |
| EC 17 - 342 ppm | 0 | 0 | 0 | 0 | 0/L | 0/L | yes |
| EC 17 - 1000 ppm | 0 | 0 | 0 | 0 | 0/L | 0/L | yes |
| EC 18.1-34,2 ppm | 0 | 0 | 0 | 0 | 0/M | 0/M | yes |
| EC 18.1-342 ppm | 0 | 0 | 0 | 0 | 0/L | 0/L | yes |
| EC 18.1-1000 ppm | 0 | 0 | 0 | 0 | 0/L | 0/L | yes |
| EC 19 - 34,2 ppm | 0 | 0 | 0 | 0 | 5/L | 5/L | yes |
| EC 19 - 342 ppm | 0 | 0 | 0 | 0 | 0/L | 0/L | yes |
| EC 19 - 1000 ppm | 0 | 0 | 0 | 0 | 0/L | 0/L | yes |
| EC 20.1-34,2 ppm | 0 | 0 | 0 | 0 | 5/M | 5/M | yes |
| EC 20.1 - 342 ppm | 0 | 0 | 0 | 0 | 3/L | 3/L | yes |
| EC 20.1-1000 ppm | 0 | 0 | 0 | 0 | 2/L | 2/L | yes |

| | | | | | | | |
|---|---|---|---|---|---|---|---|
| (*) bottom sediment | | | | | | | |

Similar analyses of emulsion spontaneity and emulsion stability was conducted for EC formulations at 54 wt.% of active ingredient, as per Example 13 to Example 16. The results of the spontaneity and stability of the oil-water emulsion obtained are shown in Table Q.

**Table Q: Emulsion spontaneity and emulsion stability (ECs with 54 wt.% active ingredient)**

| EC formulation / H2O type | T 0 | T 30 min. | T 1h | T 2h | T 24h | T 48h | Bloom |
|---|---|---|---|---|---|---|---|
| | clearness (ml) | clearness (ml) | clearness (ml) | clearness (ml) | Clearness (ml)/ Solid | clearness (ml) / Solid | |
| EC c - 34,2 ppm | 0 | 0 | 0 | 0 | 0/L | 0/L | yes |
| EC c - 342 ppm | 0 | 0 | 0 | 0 | 0/M | 0/M | yes |
| EC c - 1000 ppm | 0 | 0 | 0 | 0 | 0/M | 0/M | yes |
| EC d.1 - 34,2 ppm | 0 | 0 | 0 | 0 | 0/L | 0/L | no |
| EC d.1 - 342 ppm | 0 | 0 | 0 | 0 | 0/L | 0/L | no |
| EC d.1 - 1000 ppm | 0 | 0 | 0 | 0 | 0/L | 0/L | no |
| EC e - 34,2 ppm | 0 | 0 | 0 | 0 | 0/L | 0/L | yes |
| EC e - 342 ppm | 0 | 0 | 0 | 0 | stable | stable | yes |
| EC e- 1000 ppm | 0 | 0 | 0 | 0 | stable | stable | yes |
| EC f.2 - 34,2 ppm | 0 | 0 | 0 | 0 | 0/L | 0/L | yes |
| EC f.2 - 342 ppm | 0 | 0 | 0 | 0 | stable | stable | yes |
| EC f.2 - 1000 ppm | 0 | 0 | 0 | 0 | stable | stable | yes |
| EC g - 34,2 ppm | 0 | 0 | 0 | 0 | 0/L | 0/L | no |
| EC g - 342 ppm | 0 | 0 | 0 | 0 | 0/L | 0/L | yes |
| EC g - 1000 ppm | 0 | 0 | 0 | 0 | stable | stable | yes |
| EC h.2 - 34,2 ppm | 0 | 0 | 0 | 0 | 0/L | 0/L | yes |
| EC h.2 - 342 ppm | 0 | 0 | 0 | 0 | 0/L | 0/L | yes |
| EC h.2 - 1000 ppm | 0 | 0 | 0 | 0 | stable | stable | yes |

The results show that the C₁₀-C₁₃ LASTEA salts of the invention provide an improvement in the blending of emulsion concentrate formulations by reducing the viscosity of the final formulation. Additionally, in the case of C₁₀-C₁₃ LASTEA salts, there is no need to use 1,2-propandiol as a viscosity modifier in the final formulation, thus reducing the number of components in the final formulation.

The C₁₀-C₁₃ LASTEA salts and organic carriers of the invention result in EC formulations with a clear and bright appearance and also result in homogeneous and stable EC formulation over the time. No sedimentation appears, the EC formulations are less odorous, there is improved compatibility to active ingredient, and superior emulsion performance of active ingredient concentrations of 41.8 wt.% (the typical commercial amount of active ingredient) and 54.0 wt.%.

The combination of the C₁₀-C₁₃ LASTEA salt and organic carriers of the invention provide synergistic effect in respect of emulsion spontaneity, emulsion stability, availability of the active ingredient at the final dilution, efficiency of the EC formulation, stability for 54 wt.% and 41.8 wt.% of active ingredient, reduced human toxicity of the EC formulation with an easy handling ability, reduced flammability (lower volatility of the organic carrier) and reduced solvent odour.

## Claims

1. An oil-based formulation comprising:
a surfactant, the surfactant comprising at least
an anionic emulsifier and
a non-ionic emulsifier; and
an oil component, the oil component comprising
an organic carrier;
wherein the anionic emulsifier is one or more alkyl aryl sulfonic acid salts of the formula (I)
R¹ - Ar - SO₃⁻ X₁H⁺ (I)
where
R¹ is a C₈ to C₁₈ alkyl group,
Ar is benzene, and
X is a mono-, di- or tri- alkanolamine, wherein the alkanol within the alkanolamine is ethanol, isopropanol or mixtures thereof; and
wherein the organic carrier is selected from the group comprising an alkylbenzene, an aromatic ester, a di-alkyl ether, or mixtures thereof.

2. The oil-based formulation of claim 1, wherein the composition is substantially water free comprising less than 1000 ppm (w/w) water.

3. The oil-based formulation of claim 1 or 2, further comprising an active ingredient.

4. The oil-based formulation according to any one of the preceding claims, wherein R¹ is a C₁₀ to C₁₃ alkyl group.

5. The oil-based formulation according to any one of the preceding claims, wherein the alkyl aryl sulfonic acid salt comprises a linear alkyl group or a branched alkyl group, preferably a linear alkyl group.

6. The oil-based formulation according to any one of the preceding claims, wherein the non-ionic emulsifier is a vegetable oil alkoxylate.

7. The oil-based formulation of claim 6, wherein the vegetable oil alkoxylate is a castor oil alkoxylate, preferably a castor oil ethoxylate, a castor oil propoxylate, a castor oil EO-PO block alkoxylate, a castor oil PO-EO block alkoxylate, or a castor oil which is randomly ethoxylated and propoxylated.

8. The oil-based formulation of claim 6 or 7 wherein the vegetable oil alkoxylate is a castor oil ethoxylate with between 10 mol EO and 50 mol EO, preferably between 35 mol EO and 40 mol EO.

9. The oil-based formulation according to any one of the preceding claims wherein the formulation further comprises an alcohol, preferably a linear alcohol, a branched alcohol of a mixture thereof, most preferably a linear alcohol.

10. The oil-based formulation of claim 9 wherein the alcohol is a C₄ to a C₁₀ alcohol, preferably the alcohol is a C₆ alcohol.

11. The oil-based formulation according to any one of claims 3 to 10, wherein the active ingredient is a pesticide, a fungicide, an insecticide, a herbicide or a mixture thereof, preferably the active ingredient is a triazole-type fungicide in particular the triazole-type fungicide Propiconazole or the triazole-type fungicide Prothioconazole.

12. The oil-based formulation according to any one of the preceding claims, wherein the alkylbenzene is of the formula (II): 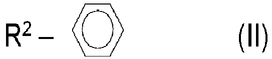 wherein R² is an alkyl group or an aryl group, preferably a linear alkyl group and most preferably R² is a C₁₀ to a C₁₇ linear alkyl group or a C₁₀ to C₁₃ linear alkyl group.

13. The oil-based formulation according to any one of the preceding claims, wherein the aromatic ester is an aromatic ester of an alcohol, the aromatic ester being of the formula (III-a)
Ar³- COOR³ (III-a)
or of the formula (III-b)
R³COO- Ar³ (III-b)
where
R³ is a C₇ to C₃₆ alkyl group, preferably a linear alkyl group, more preferably
R³ is a C₁₂ to C₁₅ linear alkyl group, and
Ar³ is an aromatic group.

14. The oil-based formulation according to any one of the preceding claims, wherein the di-alkyl ether is of the formula (IV):
R^{4a} - O - R^{4b}
wherein R^{4a} and R^{4b} are independently each alkyl groups, preferably independently each a linear alkyl group and more preferably R^{4a} and R^{4b} are independently each a C₆ to a C₁₈ alkyl group, preferably a C₆ alkyl group.

15. The oil-based formulation according to any one of the preceding claims, wherein the oil-based formulation is an emulsifiable concentrate, a suspo-concentrate, a suspo-emulsion, an oil dispersion, a micro emulsion or a micro emulsion concentrate.

16. The oil-based formulation according to any one of the preceding claims, wherein the oil-based formulation comprises independent from each other:
• the surfactant in an amount of between 1 wt.% and 20 wt.%, preferably between 5 wt.% and 15 wt.%;
• the alcohol in an amount of between 10 wt.% and 40 wt.%, preferably between 20 wt.% and 30 wt.% of the anionic emulsifier;
• the anionic emulsifier and the non-ionic emulsifier in a ratio of from 30:70 (w/w) to 70:30 (w/w), preferably, the anionic emulsifier and the non-ionic emulsifier in a ratio of 40:60 (w/w) or 60:40 (w/w);
• the organic carrier in an amount of between 15 wt.% and 90 wt.%, preferably between 30 wt.% and 50 wt.%;
• the active ingredient in an amount of between 30 wt.% and 60 wt.%, preferably between 40 wt.% and 55 wt.%.

17. A method for producing the oil-based formulation according to any one of the preceding claims, the method comprising:
(a) providing an alkyl aryl sulfonic acid;
(b) neutralising the alkyl aryl sulfonic acid with a neutralising agent comprising an amine, wherein the amine is a mono-, di- or tri- alkanolamine, wherein the alkanol within the alkanolamine is ethanol, isopropanol or mixtures thereof, the amine being dissolved in an alcohol thereby to form an alkyl aryl sulfonate salt of formula (I);
(c) mixing the alkyl aryl sulfonate salt of formula (I) with the non-ionic emulsifier to form a surfactant;
(d) adding the active ingredient dissolved in the organic carrier to the surfactant, thereby to form the oil-based formulation.

18. Use of the oil-based formulation according to any one of claims 1 to 16 in agriculture, in particular in the treatment and/or protection of crops and/or seeds and / or as an insecticide, a fungicide or a herbicide; in home pest control; in fertilizers or in veterinary medicine.
